# EUROPEAN PATENT APPLICATION

(11) **EP 4 447 206 A1**
(43) Date of publication of application: **16.10.2024**
(21) Application number: 23857653.2
(22) Date of filing: 18.08.2023
(51) Int. Cl.: H01M 50/176, H01M 50/547, H01M 50/148, H01M 50/46, H01M 50/553, H01M 50/186, H01M 10/0585, H01M 10/052

(54) **LITHIUM SECONDARY BATTERY**

(30) Priority: 23.08.2022 KR 20220105337
(71) Applicant: LG Energy Solution, Ltd., Seoul 07335 (KR)
(72) Inventor: BOK, Cheon Hee, Daejeon 34122 (KR); SUNG, Joo Hwan, Daejeon 34122 (KR)
(74) Representative: Goddar, Heinz J.
(86) International application number: PCT/KR2023/012230
(87) International publication number: WO 2024/043619

(57) **Abstract**

A lithium secondary battery may include a stacked electrode assembly including a plurality of electrode leads, which has the advantage of having a significantly lower resistance inside the battery. The lithium secondary battery may include one or more first electrode terminals and second electrode terminals that may be selectively disposed on an upper surface part of the upper cap and/or on a cap side part, respectively, thereby facilitating a position change of the electrode terminals, and providing a high degree of design freedom when configuring a battery module.

## Description

### [Cross-Reference To Related Application]

This application claims the benefit of priority to Korean Patent Application No. 10-2022-0105337, filed on August 23, 2022, the disclosure of which is incorporated herein by reference in its entirety.

### [Technical Field]

The present invention relates to a lithium secondary battery, and more particularly to a prismatic lithium secondary battery with low internal resistance and high design freedom when configuring a battery module construction.

### [Background Technology of the Invention]

Unlike primary batteries, which cannot be recharged, secondary batteries, which can be charged and discharged, have been actively researched, commercialized, and widely used for applications in various high-tech fields.

In particular, in recent years, large-capacity, high-power secondary batteries using non-aqueous electrolyte solutions with high energy density have been developed, and the large-capacity, high-power secondary batteries are generally configured in the form of high-power battery modules by connecting multiple battery cells in series and parallel to be used for power storage or devices requiring large power.

Meanwhile, these battery cells are manufactured in a variety of shapes, including cylindrical, prismatic, and pouch-type. In particular, cylindrical and prismatic cells are commonly used in medium to large-sized modules that require high power, as they are relatively easy to achieve high capacity.

The battery cell is configured by accommodating an electrode assembly formed by interposing a separator, which is an insulator, between a positive electrode and a negative electrode and an electrolyte together in a case, and by installing a cap plate on the case. In this case, the electrode assembly is connected with a positive electrode terminal and a negative electrode terminal, and these terminals are formed by protruding outwardly through the cap plate.

When these battery cells are electrically connected to form a medium to large-sized battery module, a separate space for connecting the terminals is required because the electrode terminals are fixed in one direction in the conventional structure. As a result, the volume of the battery module becomes large, and the circuit configuration of the battery module can only be placed on the upper part where the electrode terminals are located, resulting in inflexibility in configuring the battery module and severely limiting the user's selectivity. In addition, if the battery module is configured by placing the battery cells with the electrode terminals protruding from the upper part of the battery cells side by side, as described above, the height of the battery module is increased, which increases the height of the vehicle body when used in an electric vehicle.

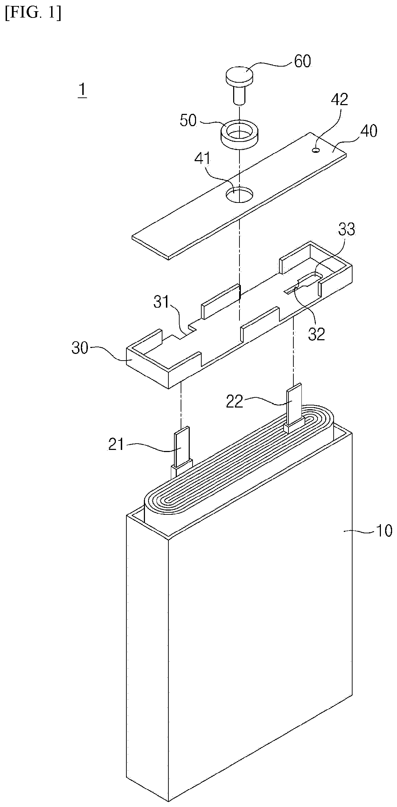

Furthermore, FIG. 1 is a perspective view of a conventional cylindrical and prismatic battery cell structure, wherein the electrode assembly applied to the cell is in the form of a jellyroll. Due to structural limitations, the electrode assembly in the form of a jellyroll can only have one positive electrode lead and one negative electrode lead protruding to the outside, so the resistance generated inside the battery is greatly limited compared to the case where a plurality of electrode leads are introduced.

Therefore, there is a need to develop a secondary battery that can reduce the internal resistance of the battery while allowing the electrode terminals to be easily repositioned to provide greater design freedom when configuring a battery module.

### [Prior Art Documents]

Korean Patent Publication No. 10-2016-0148316
Korean Patent Publication No. 10-2018-0137991

### [Description of the Invention]

### [Technical Problem]

An object of the present invention is to provide a secondary battery capable of reducing the internal resistance of a battery while allowing for easy positioning of electrode terminals, thereby providing a high degree of design freedom in the configuration of a battery module.

### [Technical Solution]

To address the problems described above, in an exemplary embodiment, the present invention provides a lithium secondary battery comprising:
a stacked electrode assembly including a first electrode, a second electrode, and a separator; and a case for accommodating the electrode assembly,
wherein the case includes:
   a main body comprising a main body side part to which an end of a first side to a fourth side is sequentially coupled, and a lower surface part coupled to a lower end of the sides; and
   an upper cap coupled to an open upper end part of the main body by including a cap side part to which an end of A-side to D-side is sequentially coupled to correspond to a first side to a fourth side of the main body, and an upper surface part coupled to an upper end of the sides,
   wherein the upper cap is provided with a first electrode terminal and a second electrode terminal, and wherein the first electrode terminal and the second electrode terminal are each provided on at least one among the upper surface part and the cap side part.

As an example, the upper cap may include the first electrode terminal and the second electrode terminal on the upper part surface; and include the first electrode terminal and the second electrode terminal on the A-side and the C-side of the cap side part, respectively, or may only include the second electrode terminal on the A-side or the C-side of the cap side part.

As another example, the upper cap may include the first electrode terminal the upper surface part; and include the first electrode terminal and the second electrode terminal on the A-side and the C-side of the cap side part, respectively, or may only include the second electrode terminal on the A-side or the C-side of the cap side part.

A total number of first electrode terminal and second electrode terminal may be three or more.

In addition, the main body may be provided with a lead penetrating part on the upper part to expose a first electrode lead and a second electrode lead on the first side and the third side, respectively.

Moreover, the lead penetrating part may be formed from a point where the height is 1/2 to 4/5 to the upper end, relative to the lower end part of the first side and third side.

In addition, a sealing part disposed between the outer periphery of the first electrode lead and the second electrode lead and the inner periphery of the lead penetrating part may be included.

Moreover, the A-side and the C-side of the upper cap may have a structure covering a lead penetrating part of the main body.

In addition, the electrode assembly has a stacked structure with a plurality of first electrodes and a plurality of second electrodes alternately stacked and a separator interposed between the first electrodes and the second electrodes, and the first electrode and the second electrode may include at least one first electrode lead and one second electrode lead, respectively, on one side and an adjacent side located at the open upper end part of the main body when the inserted into the case.

Here, the first electrode and the second electrode include an electrode active layer, respectively, wherein the electrode active layer may be located at a height lower than the lead penetrating part when inserted into the main body.

### [Advantageous Effects]

The lithium secondary battery according to the present invention has the advantage of including a stacked electrode assembly including a plurality of electrode leads, resulting in a significantly lower resistance inside the battery. The lithium secondary battery has the advantage that one or more first electrode terminals and second electrode terminals may be selectively disposed on an upper surface part of the upper cap and/or on a cap side part, respectively, thereby facilitating a position change of the electrode terminals, and providing a high degree of design freedom when configuring a battery module.

### [Brief Description of the Drawings]

FIG. 1 is a perspective view of the structure of a conventional lithium secondary battery.
FIG. 2 is a perspective view of the structure of a lithium secondary battery according to the present invention.
FIG. 3 is a schematic illustration of a location of a first electrode terminal and a second electrode terminal provided on an upper cap.
FIGS. 4 and 5 are structural diagrams illustrating a shape of a sealing part based on the presence of electrode leads in the electrode assembly.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Hereinafter, the present invention will be described in more detail.

### Lithium Secondary Battery

In an exemplary embodiment, the present invention provides a lithium secondary battery comprising
a stacked electrode assembly including a first electrode, a second electrode, and a separator; and a case for accommodating the electrode assembly, wherein
the case includes a main body comprising a main body side part to which an end of a first side to a fourth side is sequentially coupled, and a lower surface part coupled to a lower end of the sides; and an upper cap coupled to an open upper end part of the main body by including a cap side part to which an end of A-side to D-side is sequentially coupled to correspond to a first side to a fourth side of the main body, and an upper surface part coupled to an upper end of the sides,
wherein the upper cap is provided with a first electrode terminal and a second electrode terminal, and wherein the first electrode terminal and the second electrode terminal are each provided on at least one among an upper surface part and a cap side part.

A lithium secondary battery according to the present invention has a structure including an electrode assembly including a first electrode, a second electrode, and a separator, and a case in which an electrolyte is accommodated, wherein a plurality of at least one of the first electrode lead and the second electrode lead is introduced into the stacked electrode assembly to further reduce the resistance inside the battery. In addition, such a plurality of electrode leads may be electrically connected with electrode terminals provided on an upper surface part or a side part of the battery, thereby facilitating a position change of the electrode terminals, which has the advantage of providing a high degree of design freedom in configuring the battery module.

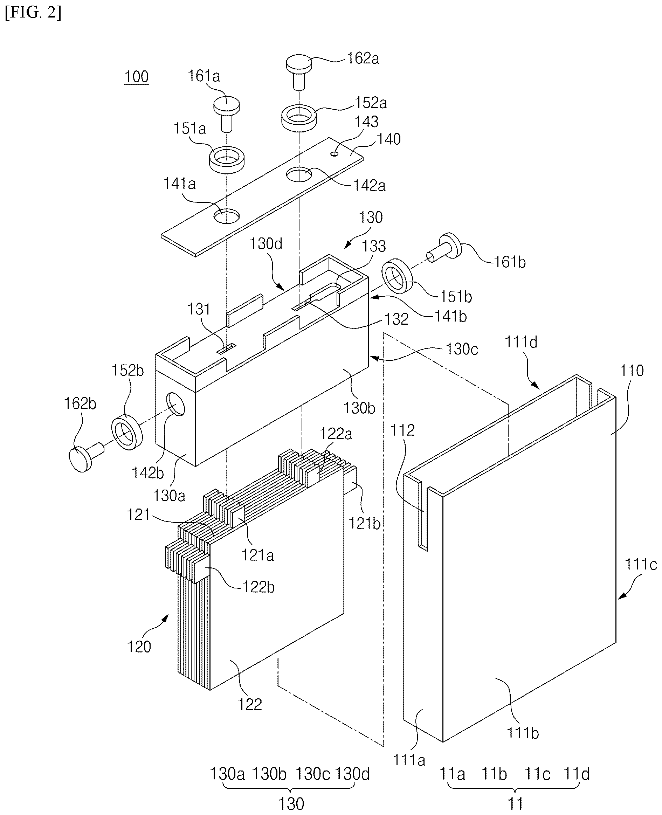

FIG. 2 is a perspective view schematically illustrating the structure of a lithium secondary battery according to the present invention, and the lithium secondary battery will be described in detail with reference to FIG. 2.

First, a lithium secondary battery 100 according to the present invention includes an electrode assembly 120 having a plurality of first electrodes 121 and a plurality of second electrodes 122 alternately stacked and a separator interposed therebetween.

The first electrode 121 and second electrode 122 may be a positive electrode or a negative electrode, respectively, and in some cases may be understood as negative electrode or positive electrode, respectively. Here, the positive electrode includes a positive electrode active layer including a positive electrode active material on at least one side of a positive electrode current collector including aluminum or the like, and includes a positive electrode tab extending from a non-coated part of the positive electrode current collector where the positive electrode active layer is not formed. In addition, the negative electrode includes a negative electrode active layer including a negative electrode active material on at least one side of a negative electrode current collector including copper or the like, and includes a negative electrode tab extending from a non-coated part of the negative electrode current collector where the negative electrode active layer is not formed. The plurality of positive electrode tabs and the plurality of negative electrode tabs may be welded to each other to form a positive electrode lead and a negative electrode lead, respectively. Furthermore, the separator may be made of a porous thin film, for example, a polyolefin-based resin.

In addition, the electrode assembly 120 may include at least one or more among first electrode leads 121a, 121b and second electrode leads 122a, 122b, respectively.

Specifically, the electrode assembly 120 may have the first electrode leads 121a, 121b and the second electrode leads 122a, 122b disposed on one side located at an upper end part of the main body 110 of a case and a side adjacent thereto when inserted into the case, and there may be one or more first electrode leads 121a, 121b and second electrode leads 122a, 122b disposed this way.

As an example, the electrode assembly 120 may include a first electrode lead 121a and a second electrode lead 122a, respectively, on one side of the electrode assembly 120 located at an upper end part of the main body 110 when inserted into the case, and may further include a first electrode lead 121b and/or a second electrode lead 122b on two adjacent sides of the one side (i.e., a first side 111a position and a third side 111c position of the main body 110).

As another example, the electrode assembly 120 may include a first electrode lead 121a or a second electrode lead 122a on one side of the electrode assembly 120 that is positioned at an upper end part of the main body 110 when inserted into the case, and may further include a first electrode lead 121b and/or a second electrode lead 122b on two adjacent sides of the one side (i.e., a first side 111a position and a third side 111c position of the main body 110).

Here, when the electrode assembly 120 includes one electrode lead 121b or 122b on one side positioned at an upper end part of the main body 110 upon being inserted into the case, and on two adjacent sides (i.e., a first side 111a position and a third side 111c position of the main body 110), the two electrode leads included in the electrode assembly 120 may be different electrode leads. Specifically, when the electrode assembly 120 includes a first electrode lead 121a on one side positioned at an upper end part of the main body 110 when inserted into the case, it may include a second electrode lead 122b on a side adjacent to the one side. In addition, when the electrode assembly 120 includes a second electrode lead 122a on one side positioned at an upper end part of the main body 110 when inserted into the case, a side adjacent to the one side may include a first electrode lead 121b.

By introducing into the electrode assembly 120 at least one electrode lead each for the first electrode 121 and the second electrode 122, and more specifically, by introducing so that the total number of first electrode leads and second electrode leads is at least three, the present invention may significantly reduce the resistance inside the battery during charge and discharge.

In addition, the lithium secondary battery 100 according to the present invention includes an electrode assembly 120 and a case to store the electrode assembly 120, wherein the case may be a battery can of various shapes, such as cylindrical or prismatic, and the like. In one example, the case may be a prismatic battery can.

Here, the case includes a main body 110 produced by a deep-drawing method or assembled according to a blueprint, and an upper cap 130, wherein the upper cap 130 may be ultrasonically welded or laser welded in an enveloping shape to an outside of the open upper end part of the main body 110 to seal the inside.

More specifically, the main body 110 is a rectangular structure with a shape corresponding to the open upper end for accommodating the electrode assembly 120 and the electrolyte (not shown), and has a structure including a main body side part 111 formed by sequentially coupling the ends of a first side 111a to a fourth side 111d, and a lower side part (not shown) coupled to the lower end of the main body side part 111.

Furthermore, the main body 110 may be provided with a lead penetrating part 112 at the upper part for exposing a first electrode lead 121b and a second electrode lead 122b on the first side 111a and third side 111c, respectively. Specifically, the aforementioned electrode assembly 120 may have first electrode lead 121a, 121b and second electrode lead 122a, 122b located on one side located on the open upper end part and an adjacent side thereof, that is, at least one among the first side 111a and third side 111c of the main body 110, when inserted into the case to reduce resistance within the battery. In this case, the first side 111a and the third side 111c may be provided with a lead penetrating part 112 for exposing the first electrode lead 121b and the second electrode lead 122b, which will be located on one or more of them.

The lead penetrating part 112 may be located at an upper part of the first side 111a and the third side 111c. More specifically, the lead penetrating part may be formed from a height above a medium height relative to the lower end part of the first side 111a and the third side 111c, such as from a point where the height is 1/2 to 4/5, more specifically from a point where the height is 3/5 to 4/5, relative to the lower end part of the first side 111a and the third side 111c, to the upper end.

By controlling the position of the lead penetrating part 112 as described above, the present invention may prevent the electrolyte accommodated inside the main body 110 from leaking to the outside, while at the same time improving the disadvantage of the circuit configuration of the battery module due to the low height of the electrode terminals disposed on the side when configuring the battery module.

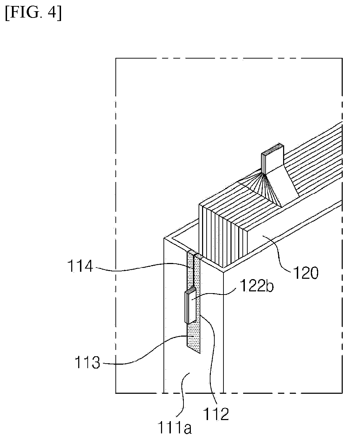

Furthermore, the lead penetrating part 112 may include a sealing part 113. Specifically, as shown in FIG. 4, when the electrode assembly 120 is provided with electrode leads on one side corresponding to the first side 111a and the third side 111c of the main body when inserted into a case, the lead penetrating part 112 may include a sealing part 113 that fills the space between an outer periphery of the electrode leads (e.g., the first electrode lead and/or the second electrode lead) and an inner periphery of the lead penetrating part to more firmly fix the electrode leads. In this case, the sealing part 113 may have an incised structure from the upper end surface of the main body 110 along the lead penetrating part 112 such that an electrode lead may be inserted in the middle, and the electrode lead may be inserted along the incision line 114.

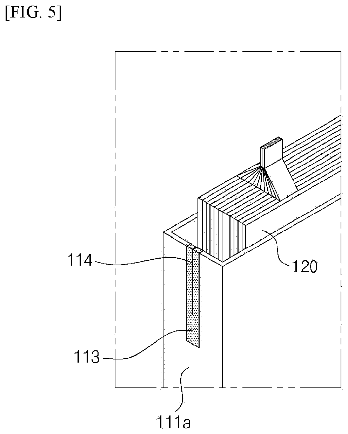

Furthermore, the sealing part 113 may be provided in a form that fills all of the inner periphery of the lead penetrating part 112 to primarily prevent leakage of the electrolyte accommodated in the main body 110 when the electrode assembly 120 is inserted into the case, when no electrode leads are provided on one side corresponding to the first side 111a and the third side 111c of the main body 110, as shown in FIG. 5.

The sealing part 113 may be configured of an elastic material to securely fix the electrode lead without damaging it upon insertion of the electrode lead, and to seal the lead penetrating part 112 upon non-insertion of the electrode lead. The elastic material is not particularly limited as long as it is conventionally used in the art, but may comprise one or more resins selected from the group consisting of epoxy, silicone, silicone-based rubber, styrene-based rubber, butadiene-based rubber, polyurethane, flexible PVC, and polypropylene copolymers.

Furthermore, the upper cap 130 that is coupled to the open upper end part of the main body 110 to seal the case includes a cap side part and an upper surface part. The cap side part 130a to 130d includes A-side 130a to D-side 130d whose ends are sequentially coupled at positions corresponding to first side 111a to fourth side 111d of the main body, and an upper surface part is coupled to the upper end of the cap side part.

Here, the upper cap 130 may have a structure that covers the lead penetrating part 112 of the main body 110 with the A-side 130a and C-side 130c of the upper cap located on the inner surface. As such, the upper cap 130 may be completely sealed internally by being welded with the lead penetrating part covered by the A-side 130a and C-side 130c of the upper cap.

In addition, the upper cap 130 may be provided with first electrode terminal 161a, 161b and second electrode terminal 162a, 162b to correspond to positions of first electrode lead 121a and second electrode lead 122a of the electrode assembly 120 stored in the main body 110. In this case, the first electrode terminal 161a, 161b and the second electrode terminal 162a, 162b are each provided on at least one among the upper surface part and the cap side part.

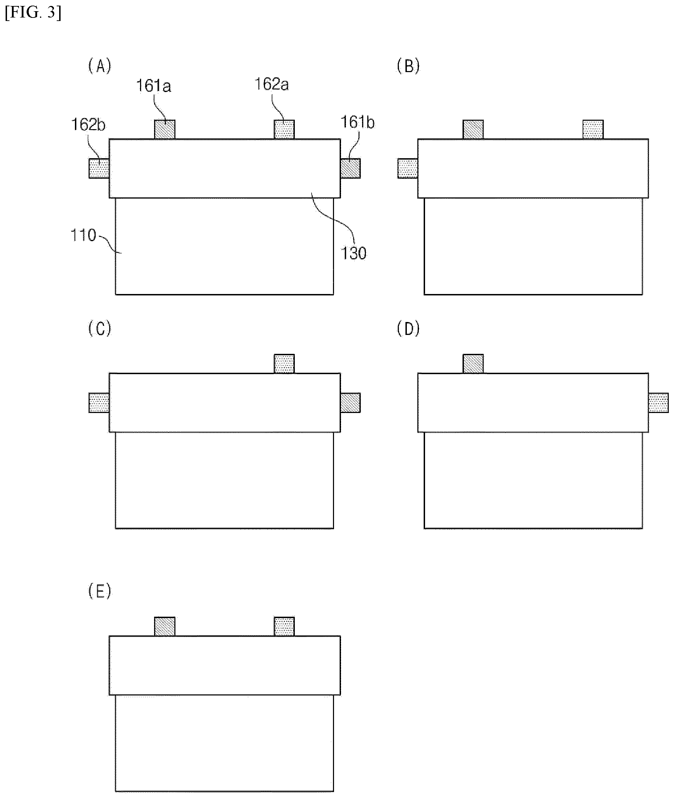

Specifically, it may include first electrode terminals 161a, 161b and second electrode terminals 162a, 162b that are electrically connected with first electrode leads 121a, 121b and second electrode leads 122a, 122b, respectively, of the electrode assembly 120 inserted into the main body 110 as shown in FIG. 3. Here, the first electrode terminals 161a, 161b and second electrode terminals 162a, 162b may be provided on at least one among an upper surface part and a cap side part of the upper cap 130 on which each electrode lead is located to correspond to the locations of the first electrode leads 121a, 121b and second electrode leads 122a, 122b, respectively. In order to reduce resistance within the battery, the previously described electrode assembly 120 may have a first electrode lead 121a, 121b and a second electrode lead 122a, 122b on one side located at an open upper end part of the main body 110 and a side adjacent thereto when inserted into the case, that is, one or more among a first side 111a and a third side 111c of the main body 110, wherein first electrode terminals 161a, 161b and second electrode terminals 162a, 162b may be provided at the positions where the first electrode leads 121a, 121b and second electrode leads 122a, 122b are provided.

In one example, the upper cap may include a first electrode terminal 161a and a second electrode terminal 162a on the upper surface, as shown in (A) and (B) of FIG. 3, respectively, along with a first electrode terminal 161b and a second electrode terminal 162b on the A-side and C-side of the cap side part, respectively, or only along with the second electrode terminal 162b on the A-side or C-side of the cap side part.

In this case, since the upper cap basically includes a first electrode terminal 161a and a second electrode terminal 162a on the upper surface, the same may be applied to conventional lithium secondary batteries and battery circuit modules having a battery can such as prismatic and the like, and the resistance inside the battery may be reduced by having additional electrode terminals on the side surface part.

As another example, the upper cap 130 may include a first electrode terminal 161a on the upper surface part, as shown in (C) and (D) of FIG. 3, along with a first electrode terminal 161b and a second electrode terminal 162b on the A-side 130a and C-side 130c of the cap side part, respectively, or only along with the second electrode terminal 162b on the A-side 130a or C-side 130c of the cap side part.

In this case, the upper cap 130 is a structure having one electrode terminal on the upper surface, and electrode terminals having a charge corresponding to the electrode terminal on the upper surface are provided on the side surface part, which has the advantage of having a higher structural freedom in the design of the battery module compared to the case of having both the first electrode terminal 161a and the second electrode terminal 162a on the upper surface.

In addition, the upper cap 130 may include three or more first electrode terminals and second electrode terminals. In this case, the secondary battery including the upper cap 130 can significantly reduce the resistance inside the battery during charging and discharging, which can improve the charging and discharging performance of the secondary battery and improve the heating phenomenon caused by the internal resistance.

Meanwhile, the main body 110 and the upper cap 130 may be configured of a lightweight conductive metal material such as aluminum, nickel, stainless steel, or an alloy thereof.

In addition, the main body 110 and the upper cap 130 may include a coating layer that exhibits insulating properties while sealing the electrolyte to an inside of a conductive metal material. Specifically, the coating layer may be a coating layer including a fluorine resin or the like.

Furthermore, the cap plate 140 is formed by including terminal through-holes 141a, 141b, 142a, 142b and electrolyte inlet 143, which are welded to the upper end opening of the upper cap 130 to seal the upper cap 130. The terminal through-holes 141a, 141b, 142a, 142b are formed at a point that is 1/3 with respect to both sides of the cap plate 140, and into said terminal through-holes 141a, 141b, 142a, 142b are inserted electrode terminals 161a, 161b, 162a, 162b insulated by gasket tubes 151a, 151b, 152a, 152b. The electrolyte inlet 143 is formed on one side of the cap plate 140, and is sealed by a ball (not shown). At this time, the electrolyte inlet 143 may be formed from a planar shape to a circular shape as shown in FIG. 2. Although not shown, the electrolyte inlet 143 may be formed in an elliptical shape, a square shape, or the like, wherein the planar shape of the electrolyte inlet 143 is not limited. The electrolyte inlet 143 may have a vertical cross-section formed as a Y-shape. Although not shown, the electrolyte inlet 143 may have a vertical cross-sectional shape formed as an eleven-shaped shape, and the like, wherein the vertical cross-sectional shape of the electrolyte inlet 143 is not limited to this.

The lithium secondary battery according to the present invention has the advantage of not only low resistance inside the battery by having the above-described configuration, but also high design freedom in configuring the battery module due to the ease of changing the position of the electrode terminals.

Hereinafter, the present invention will be described in more detail by way of examples and experimental examples.

However, the following examples and experimental examples are only illustrative of the present invention, and the contents of the present invention are not limited to the following examples and experimental examples.

### Examples.

First, 40 positive electrodes and negative electrodes each were prepared, and 81 porous polyethylene separators (width 9.5 cm × length 34.5 cm, average thickness about 20 µm) wider than the positive electrodes and negative electrodes were prepared as separators. A stacked electrode assembly was manufactured by alternately stacking the prepared positive electrodes and negative electrodes and placing the separator between them and on the outermost surface. Then, the manufactured electrode assembly was inserted into a prismatic case (width 10 cm × length 35 cm × thickness 1.6 cm) and electrolyte was injected to produce a lithium secondary battery.

In this case, the electrolyte was a liquid electrolyte to which LiPF6 as a lithium salt was added at a concentration of 1 M in an organic solvent mixed with Ethylene Carbonate (EC) and Ethyl Methyl Carbonate (EMC) in a volume ratio of 3:7, and the height of the electrolyte was adjusted so that the active layer of each electrode was sufficiently impregnated, but lower than a lead penetrating part of the prismatic case.

In addition, the prismatic cases used had the structure of FIG. 2, but were adjusted as shown in FIG. 3, with the electrode terminals of each case electrically connected with the first electrode lead and the second electrode lead of the corresponding electrode assembly.

**[Table 1]**

| | Electrode terminal arrangement |
|---|---|
| Example 1 | Structure (A) in FIG. 3 |
| Example 2 | Structure (B) in FIG. 3 |
| Example 3 | Structure (C) in FIG. 3 |
| Example 4 | Structure (D) in FIG. 3 |
| Example 5 | Structure (E) in FIG. 3 |

### Comparative Example 1.

A lithium secondary battery was manufactured in the same manner as in the examples, except that a prismatic case including a j ellyroll-type electrode assembly and having the structure of FIG. 1 was used. However, the composition (components and content) and loading amount of the active material layers respectively provided on the negative electrode and positive electrode of the electrode assembly were adjusted the same as in Example 1.

### Experimental Example.

To evaluate the battery resistance of the lithium secondary battery according to the present invention, each lithium secondary battery manufactured in the Examples and Comparative Examples was fully charged to SOC 100% under a 4.25 V voltage condition. Then, the DC resistance of each fully charged lithium secondary battery was measured, and the DC resistance deviation rate of each lithium secondary battery was calculated based on the DC resistance value of the lithium secondary battery of Comparative Example 1. The results are shown in Table 2 below.

**[Table 2]**

| | Electrode terminal arrangement | DC resistance deviation rate [%] |
|---|---|---|
| Comparative Example 1 | Structure in FIG. 1 | - |
| Example 1 | Structure (A) in FIG. 3 | -5.4 |
| Example 2 | Structure (B) in FIG. 3 | -2.8 |
| Example 3 | Structure (C) in FIG. 3 | -3.1 |
| Example 4 | Structure (D) in FIG. 3 | -1.1 |
| Example 5 | Structure (E) in FIG. 3 | -0.5 |

As shown in Table 2 above, it can be seen that the lithium secondary battery according to the present invention has a low internal resistance of the battery. This means that by including a stacked electrode assembly with a plurality of electrode tabs, the resistance generated during charge and discharge is lowered.

While the foregoing has been described with reference to preferred examples of the present invention, it will be understood by those skilled in the art or having ordinary knowledge of the art that various modifications and changes can be made to the invention without departing from the field of thought and technology described in the patent claims that will follow.

Accordingly, the technical scope of the present invention is not limited to what is described in the detailed description of the specification, but must be determined by the claims of the patent.

### [Reference numerals]

| | | | |
|---|---|---|---|
| 1: | CONVENTIONAL LITHIUM SECONDARY BATTERY | | |
| 10: | CASE | | |
| 21: | FIRST ELECTRODE LEAD | | |
| 22: | SECOND ELECTRODE LEAD | | |
| 30: | UPPER CAP | | |
| 31: | HOLE FOR FIRST ELECTRODE LEAD | | |
| 32: | HOLE FOR SECOND ELECTRODE LEAD | | |
| 33: | HOLE FOR ELECTROLYTE INJECTION | | |
| 40: | CAP PLATE | | |
| 41: | TERMINAL THROUGH-HOLES | | |
| 42: | ELECTROLYTE INLET | 50: | GASKET TUBE |
| 60: | ELECTRODE TERMINAL | | |
| 100: | LITHIUM SECONDARY BATTERY ACCORDING TO THE PRESENT INVENTION | | |
| 110: | MAIN BODY | | |
| 111A, 111B, 111C, 111D: | FIRST SIDE, SECOND SIDE, THIRD SIDE, FOURTH SIDE | | |
| 112: | LEAD PENETRATING PART | 113: | SEALING PART |
| 114: | INCISION LINE | 120: | ELECTRODE ASSEMBLY |
| 121: | FIRST ELECTRODE | | |
| 121a, 121b: | FIRST ELECTRODE LEAD | | |
| 122: | SECOND ELECTRODE | | |
| 122a, 122b: | SECOND ELECTRODE LEAD | | |
| 130: | UPPER CAP | | |
| 130a, 130b, 130c, 130d: | A-SIDE, B-SIDE, C-SIDE, D-SIDE | | |
| 131: | HOLE FOR FIRST ELECTRODE LEAD | | |
| 132: | HOLE FOR SECOND ELECTRODE LEAD | | |
| 133: | HOLE FOR ELECTROLYTE INJECTION | | |
| 140: | CAP PLATE | | |
| 141a, 141b: | THROUGH-HOLE FOR FIRST ELECTRODE TERMINAL | | |
| 142a, 142b: | THROUGH-HOLE FOR SECOND ELECTRODE TERMINAL | | |
| 143: | ELECTROLYTE INLET | | |
| 151a, 151b: | GASKET TUBE FOR FIRST ELECTRODE TERMINAL | | |
| 152a, 152b: | GASKET TUBE FOR SECOND ELECTRODE TERMINAL | | |
| 161a, 161b: | FIRST ELECTRODE TERMINAL | | |
| 162a, 162b: | SECOND ELECTRODE TERMINAL | | |

## Claims

1. A lithium secondary battery comprising:
a stacked electrode assembly comprising a first electrode, a second electrode, and a separator; and a case for accommodating the electrode assembly,
wherein the case comprises:
a main body comprising a main body side part forming a first side, a second side, a third side, and a fourth side of the main body, and a lower surface part disposed at lower ends of the first sides to the fourth sides; and
an upper cap disposed at an open upper end part of the main body and including a cap side part forming A-side, B-side, C-side, and D-side of the upper cap corresponding to the first side to the fourth side of the main body, and an upper surface part disposed at upper ends of the A-side to D-side of the upper cap,
wherein the upper cap is provided with a first electrode terminal and a second electrode terminal, and
wherein the first electrode terminal and the second electrode terminal are each provided at least one among the upper surface part and the cap side part.

2. The lithium secondary battery of claim 1, wherein the upper cap includes the first electrode terminal and the second electrode terminal at the upper surface part, and includes another first electrode terminal and another second electrode terminal on the A-side and the C-side of the cap side part, respectively.

3. The lithium secondary battery of claim 1, wherein the upper cap includes the first electrode terminal and the second electrode terminal on the upper surface part, and only includes another second electrode terminal on the A-side or the C-side of the cap side part.

4. The lithium secondary battery of claim 1, wherein the upper cap includes the first electrode terminal on the upper surface part, and
includes another first electrode terminal and the second electrode terminal on the A-side and the C-side of the cap side part, respectively.

5. The lithium secondary battery of claim 1, wherein the upper cap includes the first electrode terminal on the upper surface part, and
only includes the second electrode terminal on the A-side or the C-side of the cap side part.

6. The lithium secondary battery of claim 1, wherein a total number of first electrode terminal and second electrode terminal is three or more.

7. The lithium secondary battery of claim 1, wherein the main body is provided with a lead penetrating part at a respective upper part thereof to expose a first electrode lead and a second electrode lead on the first side and the third side.

8. The lithium secondary battery of claim 7, wherein the respective lead penetrating part is formed from a point where a height is 1/2 to 4/5 to the upper end, relative to the lower end part of the first side and third side.

9. The lithium secondary battery of claim 7, comprising a sealing part disposed between an outer periphery of the respective first electrode lead and the second electrode lead and an inner periphery of the respective lead penetrating part.

10. The lithium secondary battery of claim 7, wherein the A-side and the C-side of the upper cap covers the respective lead penetrating part of the main body.

11. The lithium secondary battery of claim 1, wherein the electrode assembly has a stacked structure with a plurality of first electrodes and a plurality of second electrodes alternately stacked and a separator interposed between the first electrodes and the second electrodes, and
the first electrode and the second electrode include at least one first electrode lead and one second electrode lead, respectively, at one side and an adjacent side located at the open upper end part of the main body when inserted into the case.

12. The lithium secondary battery of claim 7, wherein the first electrode and the second electrode include an electrode active layer, respectively,
wherein the electrode active layer is located at a height lower than the respective lead penetrating part when inserted into the main body.
